# EUROPEAN PATENT SPECIFICATION

(11) **EP 0 486 012 B1**
(45) Date of publication and mention of the grant of the patent: **14.08.1996**
(21) Application number: 91119425.6
(22) Date of filing: 14.11.1991
(51) Int. Cl.: H04N 5/44

(54) **Image reduction processing apparatus**
Gerät zur Verarbeitung der Bildverkleinerung
Appareil de traitement pour la réduction d'image

(30) Priority: 14.11.1990 JP 309385/90
(43) Date of publication of application: 20.05.1992
(73) Proprietor: MATSUSHITA ELECTRIC INDUSTRIAL CO., LTD., Kadoma-shi, Osaka-fu, 571 (JP)
(72) Inventor: Okumura Naoji, Minoh-shi, Osaka-fu (JP); Sakashita, Hirohiko, Nara-shi, Nara-ken (JP)
(74) Representative: Eisenführ, Speiser & Partner

(56) References cited:
- EP-A- 0 326 339
- EP-A- 0 381 271
- PATENT ABSTRACTS OF JAPAN vol. 14, no. 553 (E-1010)7 December 1990 & JP-A-2 237 282

## Description

### BACKGROUND OF THE INVENTION

The present invention generally relates to an image compression processing apparatus for compressing, displaying image signals of 4 : 3 in aspect ratio on an image display apparatus of 16 : 9 in aspect ratio.

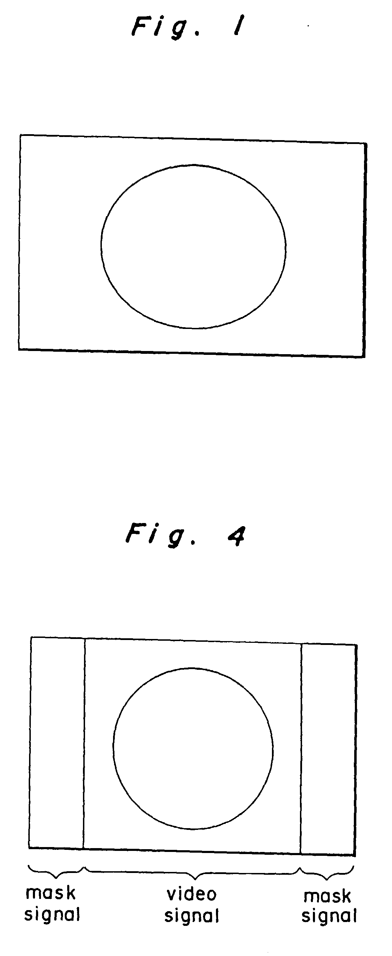

In recent years, an image display apparatus of 16 : 9 in aspect ratio in addition to a high-vision receiver is being developed to obtain forceful feelings, attending feelings with the larger picture face of the television receiver. But the image signals of 4 : 3 in the existing aspect ratio are required to be displayed. Various image compression processing apparatuses are considered as the images, if they are displayed as they are, become longer in the horizontal direction as shown in Fig. 1

The above described conventional image compression processing apparatus will be described hereinafter in its one embodiment with reference to the drawings.

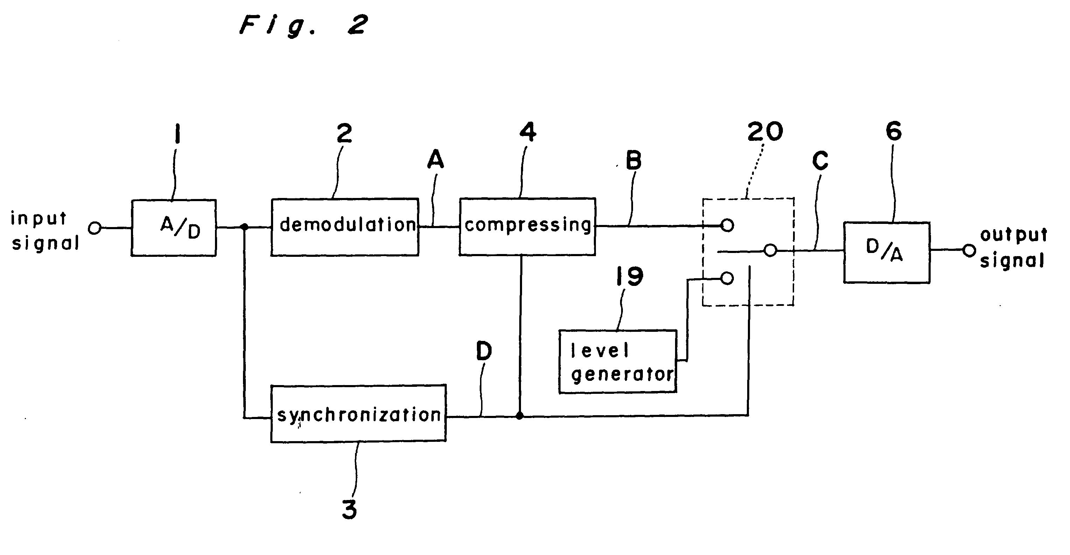

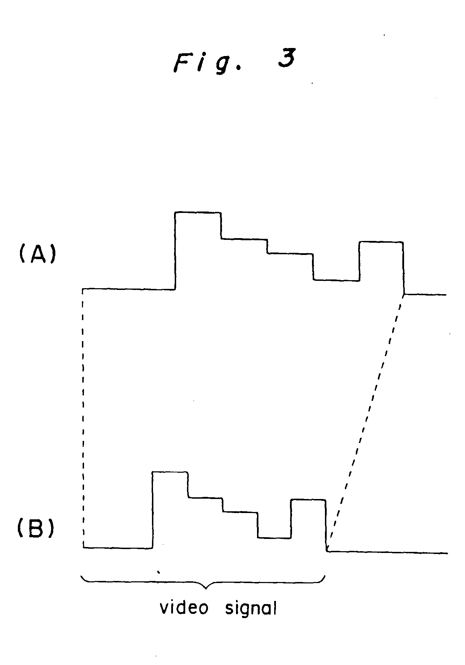

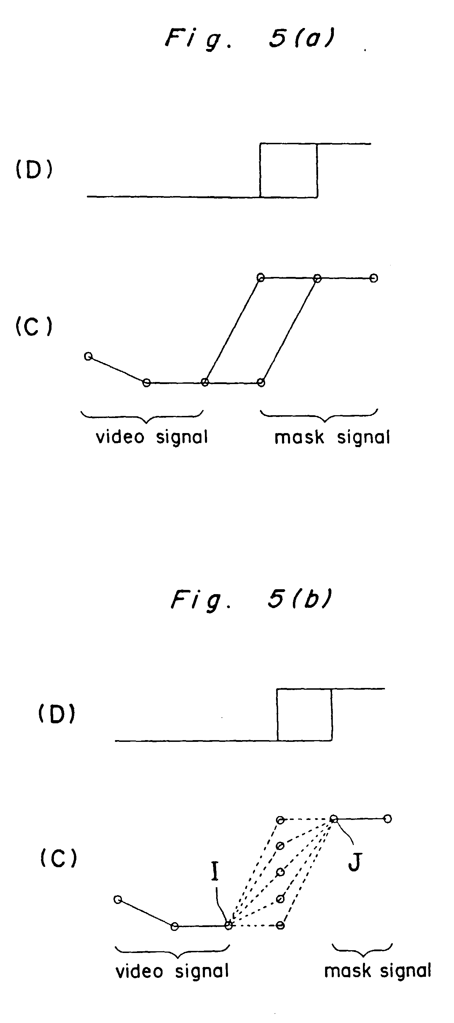

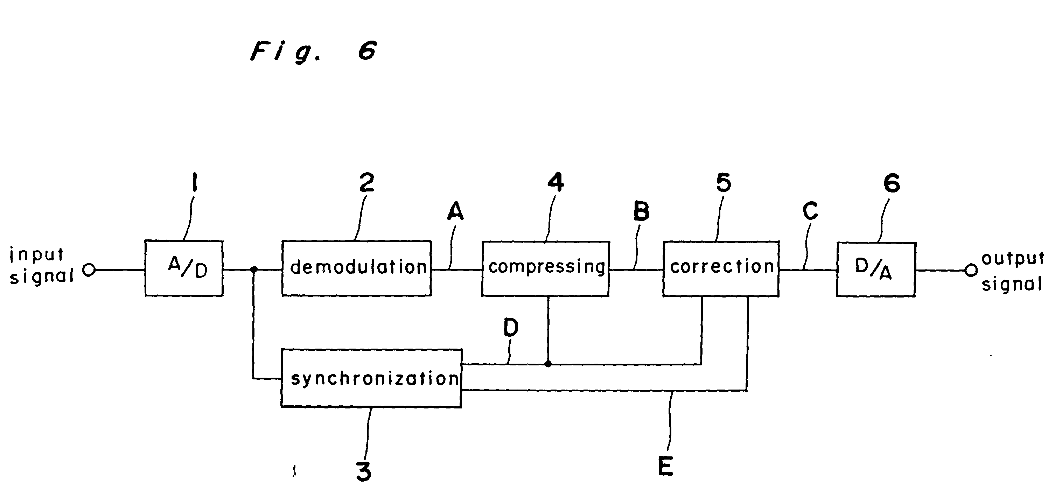

Fig. 2 is a block diagram of the conventional image compression processing apparatus from which the invention proceeds. Fig. 3 shows a compression wave form chart thereof. Fig. 1 shows a display image with an image signal of 4 : 3 in aspect ratio being displayed as it is on the display apparatus of 16 : 9 in aspect ratio. Fig. 4 is a display image when the image signal of 4 : 3 in aspect ratio has been compressed and displayed.

In Fig. 2, reference numeral 1 is an AID converter, where input signals are converted into digital signals. Reference numeral 2 is a demodulation circuit, where the image demodulation is effected from the output signals of the A/D converter 1. Reference numeral 3 is a synchronization circuit, where the signals, in a clock unit, of horizontal pulses are outputted. Reference numeral 4 is a compression circuit, where the output signals of the demodulation circuit 2 are compressed in a horizontal direction in accordance with the horizontal pulses. Reference numeral 19 is a mask level generating circuit, where mask levels are generated. Reference numeral 20 is a switching circuit, where the output signals of the compression circuit 4 and the mask levels from a mask level generating circuit 19 are switched with horizontal pulses of the outputs of the synchronization circuit 3. Reference numeral 6 is a D/A converter, where the output signals of the switching circuit 20 are converted into analog signals.

The image compression circuit constructed as described hereinabove will be described hereinafter in its operation.

The inputted image signals are converted from analog signals to digital signals with a clock locked in phase into a burst in an A/D converter 1. The converted digital signals are demodulated in the demodulation circuit 2 so that the demodulation signals A are outputted. The signals are synchronously processed in a synchronization circuit 3 so as to output horizontal pulses D of a clock unit. In a compression circuit 4, such demodulation signals A, as in Fig. 3 (A), of the outputs of a demodulation circuit 2 are compressed in a horizontal direction, so that such compression signals B as in Fig. 3 (B) are outputted. Mask levels generated in a mask level generating circuit 19 and compression signals B of the outputs of a compression circuit 4 are switched by a switching circuit 20 with the use of horizontal pulses D, so that output signals C composed of image signals and mask signals are outputted. Finally the signals are converted into analog signals, and outputted by a D/A converter 6 so as to obtain such display images as shown in Fig. 4.

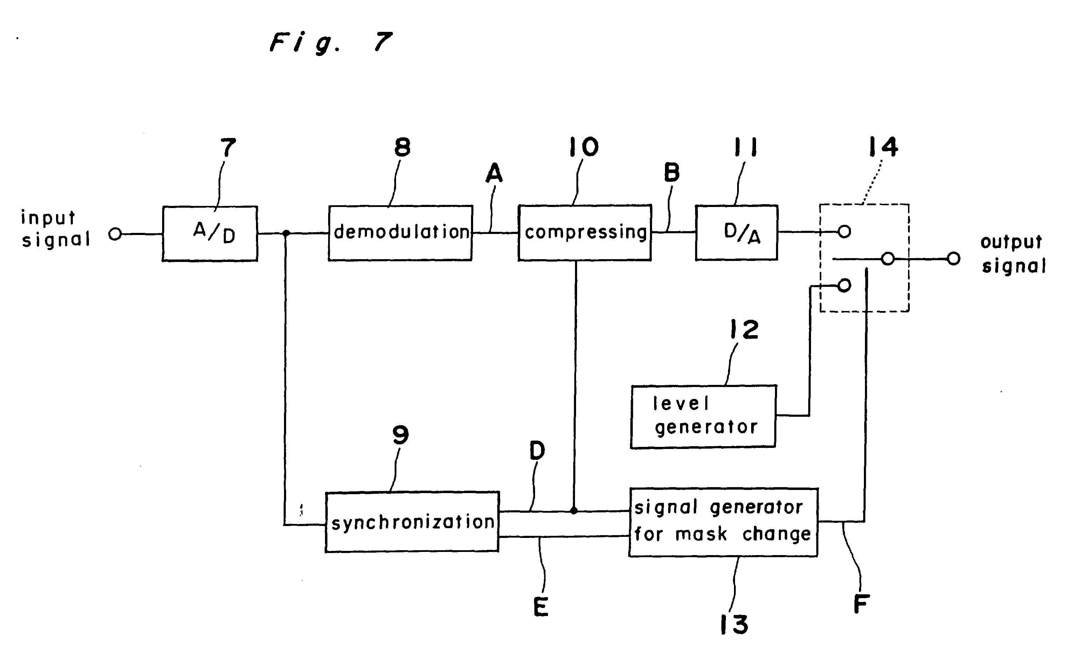

The above described construction has a problem in that horizontal pulses are jittered as in the (D) of Fig. 5 (a) in a signal without bursts in it and in a signal of a non-standard signal like VCR, thus jittering as in the (C) of Fig. 5 (a) the boundary of an image signal and a mask signal, with a problem that the image becomes awkward.

A similar apparatus is disclosed in EP-A-0 381 271.

### SUMMARY OF THE INVENTION

Accordingly, the present invention has been developed with a view to substantially eliminating the above discussed drawbacks inherent in the prior art, and has for its essential object to provide an improved image compression processing apparatus.

Another important object of the present invention is to provide an improved image compression processing apparatus where an image not jittered in the boundary between an image signal and a mask signal is obtained even in a signal without bursts in it and a non-standard signal like VCR.

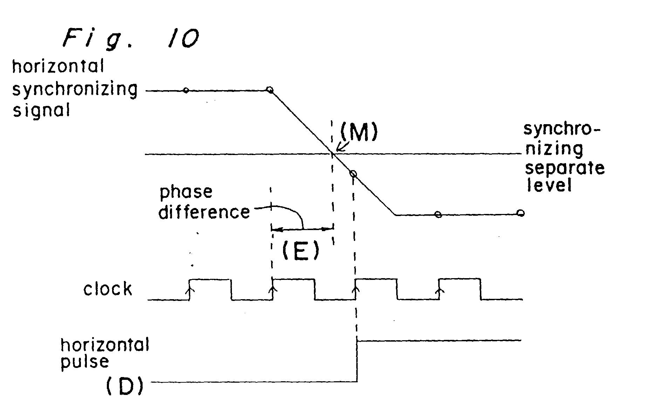

In accomplishing these and other objects, according to one aspect of the present invention, there is provided an image compression processing apparatus comprising an AID converter for converting inputted image signals into digital signals, a demodulation circuit for demodulating the output signals of the AID converter, a synchronization circuit for synchronously processing the output signals of the AID converter so as to output signals of horizontal pulses (D), a compression circuit (4) for compressing in a horizontal direction the output signals (A) of the demodulation circuit with the horizontal pulses (D) of the output signals of the synchronization circuit being provided as a standard, and a D/A converter for converting output signals into analogue signals, characterized in that the synchronization circuit (3) outputs, in clock units, the horizontal pulses (D) and a phase difference information (E) wherein the horizontal pulses (D) are outputted from a sample when, at a timing corresponding to a rising edge of the clock, the horizontal synchronous signals, sampled in accordance with the clocks have become lower than the synchronous separation level, and , an intersection point (Fig. 10 (M)) between the horizontal synchronous signal and the synchronous separation level is obtained so as to output the phase difference information (E) with respect to the clock; and
a correcting circuit is provided for masking portions except image signals of the output signals (B) of the compression circuit with the use of the horizontal pulses (D), in a clock units, of the output signals of the synchronization circuit, and the phase difference information (E) by switching between the compressed output signal (B) and a mask signal representing a non-visible level, the switching boundaries being interpolated between the last sample of the compressed image signal and the first sample of the mask signal, and the D/A converter converts the output signals of the correcting circuit into analogue signals.

According to a further aspect of the present invention, there is provided an image compression processing apparatus comprising an A/D converter for converting inputted image signals into digital signals, a demodulation circuit for demodulating the output signals of the A/D converter, a synchronization circuit for synchronously processing the output signals (A) of the A/D converter so as to output signals of horizontal pulses (D), a compression circuit for compressing in a horizontal direction the output signals (A) of the demodulation circuit with the horizontal pulses (D) of the output signals of the synchronization circuit being provided as a standard, a level generating circuit for generating a masking signal level, and a switching circuit for switching the output signals of the compression circuit and the output signals of the level generating circuit, and a D/A converter for converting output signals into analog signals, characterized in that the synchronization circuit outputs, in clock units, the horizontal pulses (D) and a phase difference information (E) wherein the horizontal pulses (D) are outputted from a sample when, at a timing corresponding to a rising edge of the clock, the horizontal synchronous signals, sampled in accordance with the clocks, have become lower than the synchronous separation level, and, an intersection point (Fig. 10 (M)) between the horizontal synchronous signal and the synchronous separation level is obtained so as to output the phase difference information (E) with respect to the clock, the D/A converter converts into analog signals the output signals (B) of the compression circuit, a mask switching signal generating circuit is provided for generating switching signals (F) for masking the portions except the image signals with the use of the horizontal pulses (D), in clock units, of the output signals of the synchronization circuit, and the phase difference information (E), the level generating circuit (12) generates a masking signal level wherein the switching boundaries are interpolated between the compressed signals (B) and the mask signal with the use of phase difference information (E), and the switching circuit switches the output signals of the D/A converter and the output signals of the level generating circuit with an output signal (F) of the mask switching signal generating circuit.

A further advantageous embodiment of the invention is defined in claim 3.

In the present invention, image signals inputted by the A/D converter, the demodulation circuit, the compression circuit which are the same components as in the conventional image compression processing apparatus in the above described first construction are compressed in the horizontal direction, the horizontal pulses of the clock unit and the phase difference information are outputted by the synchronization circuit, and the signals compressed in the correcting circuit and the mask levels are switched by horizontal pulses. In this case, the boundary of the switching is interpolated with the use of the phase difference information, and thereafter, is converted into analog signals by a D/A converter, and is outputted.

The image signals inputted by the A/D converter, the demodulation circuit, the compression circuit which are the same components as in the conventional image compression circuit are compressed in the horizontal direction by the above described second construction, and the compressed signals are converted into analog signals by the D/A converter. The horizontal pulses of the clock unit and the phase difference information are outputted by the synchronization circuit so as to generate the horizontal pulses of the analog having the phase difference information in the mask switching signal generating circuit. The outputs of the level generating circuit for generating the mask levels with the outputs of the mask switching signal generating circuit, and the compressed signals are switched and outputted.

### BRIEF DESCRIPTION OF THE DRAWINGS

These and other objects and features of the present invention will become apparent from the following description taken in conjunction with the preferred embodiment thereof with reference to the accompanying drawings, in which;
Fig. 1 and Fig. 4 show views each showing a display image;
Fig. 2 is a block diagram of the conventional image compression processing apparatus;
Fig. 3 is its wave form chart;
Fig. 5 and Fig. 9 respectively show a wave form chart thereof;
Fig. 6 is a block diagram of an image compression processing apparatus in one embodiment of the present invention;
Fig. 7 is a block diagram of an image compression processing apparatus in another embodiment of the present invention; and
Fig. 8 is a block diagram each being a mask switching signal generating circuit in the image compression processing apparatus of Fig. 7.

### DETAILED DESCRIPTION OF THE INVENTION

Before the description of the present invention proceeds, it is to be noted that like parts are designated by like reference numerals throughout the accompanying drawings.

Referring now to the drawings, there are shown in Fig. 6, a block diagram of an image compression processing circuit, and in Fig. 5 (b) the wave form chart thereof, according to one preferred embodiment of the present invention.

In Fig. 6, reference numeral 1 is an A/D converter for converting inputted image signals into digital signals, reference 2 is a demodulation circuit for demodulating the output signals of the A/D converter 1, reference numeral 3 is a synchronization circuit for synchronously processing the output signal of the A/D converter 1 so as to output the signals, in a clock unit, of the horizontal pulses, and the phase difference information, reference neural 4 is a compression circuit for compressing in a horizontal direction the output signals of the demodulation circuit 2 with the horizontal pulses of the output signals of the synchronization circuit 3 being provided as a standard, reference numeral 5 is a correcting circuit for masking the portions except the image signals of the output signals of the compression circuit 4 with the use of the horizontal pulses in the clock unit of the output signals of the synchronization circuit 3, and the phase difference information, reference numeral 6 is a D/A converter for converting the output signals of the correcting circuit 5 into analog signals.

The above described image compression processing apparatus will be described hereinafter in its operation with the use of Fig. 6 and Fig. 5.

Inputted image signals are converted into digital signals from analog signals with a clock locked in phase to bursts in the A/D converter 1. The converted digital signals are demodulated in the demodulating circuit 2 so that the demodulation signals A are outputted. The horizontal pulses (D) in a clock unit are outputted from a sample where the horizontal synchronous signals sampled in a clock as in Fig. 1 become lower than the synchronous separation level with a clock as in Fig. 10 in the synchronization circuit 3. At the same time, an intersection point (Fig. 10 (M)) between the sampled horizontal synchronous signal and the synchronous separation level is obtained so as to output phase difference information (E) with respect to the clock.

Such demodulation signals A as in Fig. 3 (A) of the demodulation circuit 2 output in the compression circuit 4 are compressed in the horizontal direction with the horizontal pulses D being provided as a standard, so that such compression signals B as shown in Fig. 3 (B) are outputted. Then, although the compression signals B and the mask signals are switched with horizontal pulses D in the correcting circuit 5, the switching boundary is interpolated between the last sample I of the compressed image signals and the first sample J of the mask signals as shown in the (C) of Fig. 5 (b) with the use of the phase difference information E so as to output the output signals C composed of image signals and mask signals. Finally, the signals are converted into analog signals and outputted the D/A converter 6 so that such display images as shown in Fig. 4 are obtained.

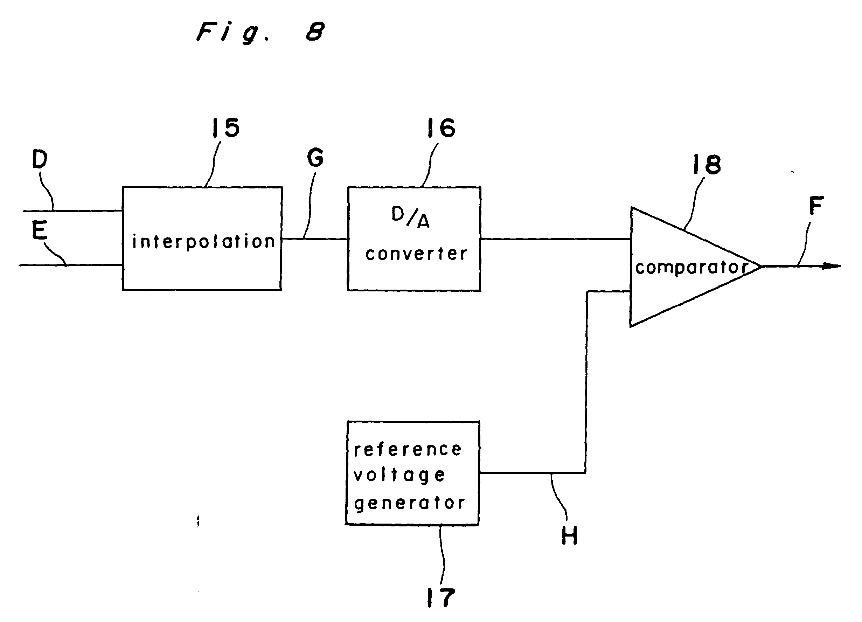

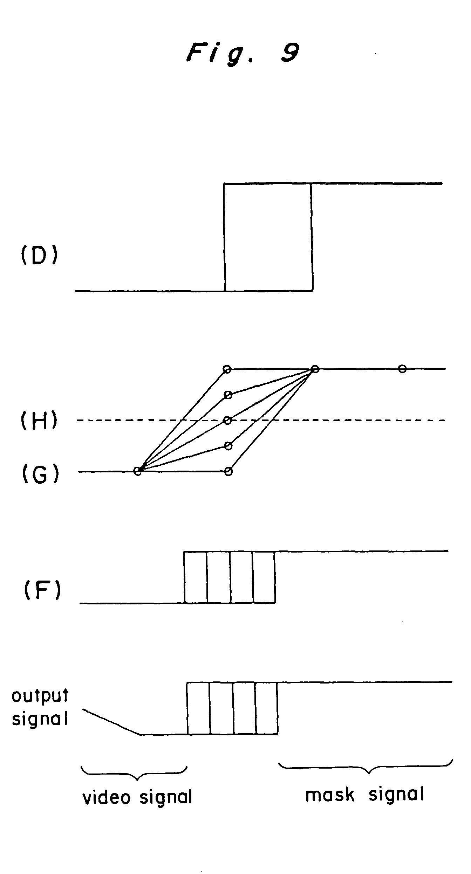

Fig. 7 shows a block diagram of an image compression processing apparatus in another embodiment of the present invention. Fig. 8 shows a block diagram of a mask switching signal generating circuit in the image compression compressing apparatus. Fig. 9 shows a wave form view thereof.

In Fig. 7, reference numeral 7 is an A/D converter for converting the inputted image signals into digital signals, reference numeral 8 is a demodulation circuit for demodulating the output signals of the A/D converter 7, reference numeral 9 is a synchronization circuit for synchronously processing the output signals of the A/D converter 7 so as to output the signals, in a clock unit, of the horizontal pulses, and the pulse difference information, reference numeral 10 is a compression circuit for compressing in a horizontal direction the output signals of the demodulation circuit 8 with the horizontal pulses of the output signals of the synchronization circuit 9 being provided as a standard, reference numeral 11 is a D/A converter for converting the output signals of the compression circuit 10 into analogue signals, reference numeral 13 is a mask switching signal generating circuit for generating switching signals for masking the portions except the image signals with the use of horizontal pulses of the clock unit of the output signals of the synchronization circuit 9, and the phase difference information, reference numeral 12 is a mask level generating circuit for generating the masking signal levels, reference numeral 14 is a switching circuit for switching with output signals of a mask switching signal generating circuit 13 the output signals of the D/A converter 11 and the output signals of a mask level generating circuit 12.

In Fig. 8, reference numeral 15 is an interpolating circuit for interpolating the horizontal pulses in a clock unit with the use of the phase difference information, reference numeral 16 is a D/A converter for converting the output signals of the interpolating circuit 15 into analog signals, reference numeral 17 is a reference voltage generating circuit for generating a standard voltage, reference numeral 18 is a comparator for comparing the output signals of the D/A converter 16 with the standard voltages 17.

An image compression processing apparatus constructed like this will be described hereinafter in its operation with reference to Fig. 7, Fig. 8 and Fig. 9.

The inputted image signals are converted into digital signals from analog signals with a clock locked in pulse to bursts in the A/D converter 7. The converted digital signals are demodulated in the demodulation circuit 8 so that the demodulation signals A are outputted. Also, in the synchronization circuit 9, the synchronous processing operation is effected, and the horizontal pulses D of the clock unit and the phase difference information E are outputted. And in the compression circuit 10, such demodulation signals A as in Fig. 3 (A) of the outputs of the demodulation circuit 8 are compressed in the horizontal direction with the horizontal pulses D being provided as a standard, and the compression signals B as in Fig. 3 (B) are outputted and are converted into analog signals by a D/A converter 11. Also, in the interpolating circuit 15, the horizontal pulses D are interpolated by the phase difference information E, and such signals G shown in (G) of Fig. 9 are outputted and are converted into analog signals by the D/A converter 16. Such standard voltage H shown in the (H) of Fig. 9 generated by the reference voltage generating circuit 17 in the comparator 18 is compared so as to output such signal F as shown in the (F) of Fig. 9. Therefore, the output signals F of the comparator 18 become horizontal pulses having phase difference information. In the switching circuit 14, the outputs of the mask level generating circuit 12 for generating the mask levels and the output signals of the D/A converter 11 which are the compressed image signals are switched and outputted with the output signals F of the comparator 18.

As is clear from the foregoing description, according to the arrangement of the present invention, by the A/D converter, the modulation circuit, the synchronization circuit, the compression circuit, the correcting circuit, the D/A converter provided in construction, the switching boundary between the compressed signals and the mask levels is interpolated with the use of the phase difference information, so that images where the boundary between the image signals and the mask signals are not jittered even in signals without bursts in them and the non-standard signals like VCR can be provided.

Also, by the A/D converter, the demodulation circuit, the synchronization circuit, the compression circuit, the D/A converter, the mask switching signal generating circuit, the level generating circuit, the switching circuit provided in circuit, the horizontal pulses are interpolated with the phase difference information, the compressed signals and the mask levels are switched with the mask switching signals of the analog having the phase difference information so that images where the boundary between the image signals and the mask signals is not jittered even in signals without bursts in them and the non-standard signals like VCR can be provided.

## Claims

1. An image compression processing apparatus comprising:
an A/D converter (1) for converting inputted image signals into digital signals;
a demodulation circuit (2) for demodulating the output signals of the A/D converter (1);
a synchronization circuit (3) for synchronously processing the output signals of the A/D converter (1) so as to output signals of horizontal pulses (D);
a compression circuit (4) for compressing in a horizontal direction the output signals (A) of the demodulation circuit (2) with the horizontal pulses (D) of the output signals of the synchronization circuit (3) being provided as a standard; and a DIA converter (6) for converting output signals into analogue signals;
characterized in that
the synchronization circuit (3) outputs, in clock units, the horizontal pulses (D) and a phase difference information (E) wherein the horizontal pulses (D) are outputted from a sample when, at a timing corresponding to a rising edge of the clock, the horizontal synchronous signals, sampled in accordance with the clocks, have become lower than a synchronous separation level, and an intersection point (Fig. 10 (M)) between the horizontal synchronous signal and the synchronous separation level is obtained so as to output the phase difference information (E) with respect to the clock; and
a correcting circuit (5) is provided for masking portions except image signals of the output signals (B) of the compression circuit (4) with the use of the horizontal pulses (D), in clock units, of the output signals of the synchronization circuit (3), and the phase difference information (E) by switching between the compressed output signal (B) and a mask signal representing a non-visible level, the switching boundaries being interpolated between the last sample of the compressed image signal and the first sample of the mask signal; and
the D/A converter (6) converts the output signals of the correcting circuit (5) into analogue signals.

2. An image compression processing apparatus comprising:
an A/D converter (7) for converting inputted image signals into digital signals;
a demodulation circuit (8) for demodulating the output signals of the A/D converter (7);
a synchronization circuit (9) for synchronously processing the output signals (A) of the A/D converter (7) so as to output signals of horizontal pulses (D);
a compression circuit (10) for compressing in a horizontal direction the output signals (A) of the demodulation circuit (8) with the horizontal pulses (D) of the output signals of the synchronization circuit (9) being provided as a standard;
a level generating circuit (12) for generating a masking signal level; and
a switching circuit (14) for switching the output signals of the compression circuit (10) and the output signals of the level generating circuit (12); and
a D/A converter (11) for converting output signals into analog signals;
characterized in that
the synchronization circuit (9) outputs, in clock units, the horizontal pulses (D) and a phase difference information (E) wherein the horizontal pulses (D) are outputted from a sample when, at a timing corresponding to a rising edge of the clock, the horizontal synchronous signals, sampled in accordance with the clocks, have become lower than a synchronous separation level , and, an intersection point (Fig. 10 (M)) between the horizontal synchronous signal and the synchronous separation level is obtained so as to output the phase difference information (E) with respect to the clock;
the D/A converter (11) converts into analog signals the output signals (B) of the compression circuit (10);
a mask switching signal generating circuit (13) is provided for generating switching signals (F) for masking the portions except the image signals with the use of the horizontal pulses (D), in clock units, of the output signals of the synchronization circuit, and the phase difference information (E);
the level generating circuit (12) generates a masking signal level wherein the switching boundaries are interpolated between the compressed signals (B) and the mask signal with the use of phase difference information (E); and
the switching circuit (14) switches the output signals of the D/A converter (11) and the output signals of the level generating circuit (12) with an output signal (F) of the mask switching signal generating circuit (13).

3. An image compression processing apparatus described in accordance with the claim 2, wherein the mask switching signal generating circuit (13) is composed of an interpolating circuit (15) for interpolating horizontal pulses (D) of a clock unit with the use of phase difference information (E), a D/A converter (16) for converting the output signals (G) of the interpolating circuit (15) into analog signals, a reference voltage generating circuit (17) for generating a standard voltage (H), and a comparator (18) for comparing the output signal of the D/A converter (16) with the standard voltage (H).

## Patentansprüche

1. Bildkompressionsverarbeitungsvorrichtung, mit:
einem A/D-Wandler (1) zum Wandeln eingegebener Bildsignale in digitale Signale;
einer Demodulationsschaltung (2) zum Demodulieren der Ausgangssignale des A/D-Wandlers (1);
einer Synchronisationsschaltung (3) zum synchronen Verarbeiten der ausgegebenen Signale des A/D-Wandlers (1), um Signale horizontaler Impulse (D) auszugeben;
einer als Standard vorgesehenen Kompressionsschaltung (4) zum Komprimieren der ausgegebenen Signale (A) der Demodulationsschaltung (2) mit den horizontalen Impulsen (D) der ausgegebenen Signale der Synchronisationsschaltung (3) in einer horizontalen Richtung; und
einem D/A-Wandler (6) zum Wandeln der ausgegebenen Signale in analoge Signale;
dadurch gekennzeichnet, daß
die Synchronisationsschaltung (3) in Takteinheiten die horizontalen Impulse (D) und eine Phasendifferenzinformation (E) ausgibt, wobei die horizontalen Impulse (D) von einer Abtastung ausgegeben werden, wenn bei einer Zeitsteuerung, die einer ansteigenden Flanke des Taktes entspricht, die horizontalen synchronen Signale, die in Übereinstimmung mit den Takten abgetastet werden, niedriger als ein synchroner Separationspegel geworden sind, und ein Schnittpunkt (Fig. 10 (M)) zwischen dem horizontalen synchronen Signal und dem synchronen Separationspegel wird erhalten, um die Phasendifferenzinformation (E) bezogen auf den Takt auszugeben; und
eine Korrekturschaltung (5) vorgesehen ist zum Maskieren von Teilen mit Ausnahme von Bildsignalen der ausgegebenen Signale (B) der Kompressionsschaltung (4) unter Verwendung der horizontalen Impulse (D), in Takteinheiten der Ausgangssignale der Synchronisationsschaltung (3) und der Phasendifferenzinformation (E) durch Umschalten zwischen dem komprimierten Ausgangssignal (B) und einem Maskensignal, das einen unsichtbaren Pegel darstellt, wobei die Umschaltgrenzen interpoliert werden zwischen der letzten Abtastung des komprimierten Bildsignals und der ersten Abtastung des Maskensignals; und
der D/A-Wandler (6) die Ausgangssignale der Korrekturschaltung (5) in analoge Signale wandelt.

2. Bildkompressionsverarbeitungsvorrichtung, mit:
einem A/D-Wandler (7) zum Wandeln eingegebener Bildsignale in digitale Signale;
einer Demodulationsschaltung (8) zum Demodulieren der ausgegebenen Signale des A/D-Wandlers (7);
einer Synchronisationsschaltung (9) zum synchronen Verarbeiten der ausgegebenen Signale (A) des A/D-Wandlers (7), um Signale horizontaler Impulse (D) auszugeben;
einer als Standard vorgesehenen Kompressionsschaltung (10) zum Komprimieren der ausgegebenen Signale (A) der Demodulationsschaltung (8) mit den horizontalen Impulsen (D) der ausgegebenen Signale der Synchronisationsschaltung (9);
einer Pegelerzeugungsschaltung (12) zum Erzeugen eines Maskensignalpegels;
einer Umschalt-Schaltung (14) zum Umschalten der ausgegebenen Signale der Kompressionsschaltung (10) und der ausgegebenen Signale der Pegelerzeugungsschaltung (12); und
einem D/A-Wandler (11) zum Wandeln der ausgegebenen Signale in analoge Signale;
dadurch gekennzeichnet, daß
die Synchronisationsschaltung (9) in Takteinheiten die horizontalen Impulse (D) und eine Phasendifferenzinformation (E) ausgibt, wobei die horizontalen Impulse (D) von einer Abtastung ausgegeben werden, wenn bei einer Zeitsteuerung, die einer ansteigenden Flanke des Taktes entspricht, die horizontalen synchronen Signale, die in Übereinstimmung mit den Takten abgetastet werden, niedriger als ein synchroner Separationspegel geworden sind, und ein Schnittpunkt (Fig. 10 (M)) zwischen dem horizontalen synchronen Signal und dem synchronen Separationspegel wird erhalten, um die Phasendifferenzinformation (E) bezogen auf den Takt auszugeben;
der D/A-Wandler (11) die ausgegebenen Signale (B) der Kompressionsschaltung (10) in analoge Signale wandelt;
eine Maskenumschaltsignalerzeugungsschaltung (13) vorgesehen ist zum Erzeugen von Umschaltsignalen (F) zum Maskieren der Teile mit Ausnahme der Bildsignale, unter Verwendung der horizontalen Impulse (D), in Takteinheiten der ausgegebenen Signale der Synchronisationsschaltung (9) und der Phasendifferenzinformation (E);
die Pegelerzeugungsschaltung (12) einen Maskierungssignalpegel erzeugt, wobei die Umschaltgrenzen interpoliert werden zwischen den komprimierten Signalen (B) und dem Maskensignal, unter Verwendung der Phasendifferenzinformation (E); und
die Umschalt-Schaltung (14) die Ausgangssignale des D/A-Wandlers (11) und die Ausgangssignale der Pegelerzeugungsschaltung (12) mit einem Ausgangssignal (F) mit der Maskenumschaltsignalerzeugungsschaltung (13) umschaltet.

3. Bildkompressionsverarbeitungsvorrichtung nach Anspruch 2,
bei welcher die Maskenumschaltsignalerzeugungsschaltung (13) gebildet ist aus einer interpolierenden Schaltung (15) zum Interpolieren horizontaler Impulse (D) einer Takteinheit unter Verwendung der Phasendifferenzinformation (E), einem D/A-Wandler (16) zum Konvertieren der Ausgangssignale (G) der interpolierenden Schaltung (15) in analoge Signale, einer Referenzspannungserzeugungsschaltung (17) zum Erzeugen einer Standardspannung (H) und einem Komparator (18) zum Vergleichen des Ausgangssignals des D/A-Wandlers (16) mit der Standardspannung (H).

## Revendications

1. Appareil de traitement pour la réduction d'image comprenant :
un convertisseur A/N (1) pour convertir des signaux d'image entrés en signaux numériques;
un circuit de démodulation (2) afin de démoduler les signaux de sortie du convertisseur A/N (1);
un circuit de synchronisation (3) pour traiter de manière synchrone les signaux de sortie du convertisseur A/N (1) de façon à sortir des signaux d'impulsions horizontales (D);
un circuit de réduction (4) pour réduire dans la direction horizontale les signaux de sortie (A) du circuit de démodulation (2), les impulsions horizontales (D) des signaux de sortie du circuit de synchronisation (3) étant fournis comme standard; et
un convertisseur N/A (6) pour convertir les signaux de sortie en signaux analogiques;
caractérisé en ce que
le circuit de synchronisation (3) sort en unités d'horloge les impulsions horizontales (D) et une information sur la différence de phase (E) dans lequel les impulsions horizontales (D) sont sorties à partir d'un échantillon lorsque, à un minutage correspondant au front de montée de l'horloge, les signaux synchrones horizontaux, échantillonnés en conformité avec les horloges sont devenus inférieurs à un niveau de séparation synchrone et un point d'intersection (figure 10 (M)) entre le signal synchrone horizontal et le niveau de séparation synchrone est obtenu de façon à sortir l'information sur la différence de phase (E) par rapport à l'horloge; et
un circuit de correction (5) est fourni pour masquer des portions à l'exception des signaux d'image des signaux de sortie (B) du circuit de réduction (4). avec l'utilisation des impulsions horizontales (D), en unités d'horloge, des signaux de sortie du circuit de synchronisation (3), et l'information sur la différence de phase (E) par commutation entre le signal de sortie réduit (B) et un signal de masque représentant un niveau non visible, les limites de commutation étant interpolées entre le dernier échantillon du signal d'image réduit et le premier échantillon du signal de masque; et
le convertisseur N/A (6) convertit les signaux de sortie du circuit de correction (5) en signaux analogiques.

2. Appareil de traitement pour la réduction d'image comprenant :
un convertisseur A/N (7) pour convertir les signaux d'image entrés en signaux numériques;
un circuit de démodulation (8) pour démoduler les signaux de sortie du convertisseur A/N (7);
un circuit de synchronisation (9) pour traiter de manière synchrone les signaux de sortie (A) du convertisseur A/N (7) de façon à sortir des signaux de sortie d'impulsions horizontales (D);
un circuit de réduction (10) pour réduire dans la direction horizontale les signaux de sortie (A) du circuit de démodulation (8), les impulsions horizontales (D) des signaux de sortie du circuit de synchronisation (9) étant fournies comme standard;
un circuit générateur de niveau (12) pour produire un niveau de signal de masquage; et
un circuit de commutation (14) pour commuter les signaux de sortie du circuit de réduction (10) et les signaux de sortie du circuit générateur de niveau (12); et
un convertisseur N/A (11) pour convertir les signaux de sortie en signaux analogiques;
caractérisé en ce que
le circuit de synchronisation (9) sort, en unités d'horloge, les impulsions horizontales (D) et une information sur la différence de phase (E) dans lequel les impulsions horizontales (D) sont sorties à partir d'un échantillon lorsque, à un minutage correspondant au front de montée de l'horloge, les signaux synchrones horizontaux, échantillonnés conformément aux horloges sont devenus inférieurs à un niveau de séparation synchrone, et un point d'intersection (figure 10 (M)) entre le signal synchrone horizontal et le niveau de séparation synchrone est obtenu de façon à sortir l'information sur la différence de phase (E) par rapport à l'horloge;
le convertisseur N/A (11) convertit en signaux analogiques les signaux de sortie (B) du circuit de réduction (10);
un circuit générateur de signal de commutation de masque (13) est fourni pour produire des signaux de commutation (F) afin de masquer les portions à l'exception des signaux d'image avec l'utilisation des impulsions horizontales (D), en unités d'horloge, des signaux de sortie du circuit de synchronisation et l'information sur la différence de phase (E);
le circuit générateur de niveau (12) produit un niveau de signal de masquage dans lequel les limites de commutation sont interpolées entre les signaux réduits (B) et le signal de masque avec l'utilisation de l'information sur la différence de phase (E); et
Le circuit de commutation (14) commute les signaux de sortie du convertisseur N/A (11) et les signaux de sortie du circuit générateur de niveau (12) avec un signal de sortie (F) du circuit générateur de signal de commutation de masque (13).

3. Appareil de traitement pour la réduction d'image selon la revendication (2), dans lequel le circuit générateur de signal de commutation de masque (13) est constitué d'un circuit d'interpolation (15) pour interpoler les impulsions horizontales (D) d'une unité d'horloge avec l'utilisation de l'information sur la différence de phase (E), un convertisseur N/A (16) pour convertir les signaux de sortie (G) du circuit d'interpolation (15) en signaux analogiques, un circuit générateur de tension de référence (17) pour produire une tension standard (H), et un comparateur (18) pour comparer le signal de sortie du convertisseur N/A (16) à la tension standard (H).
